# FASCICULE DE BREVET EUROPEEN

(11) **EP 0 353 512 B1**
(45) Date de publication et mention de la délivrance du brevet: **10.02.1993**
(21) Numéro de dépôt: 89112805.0
(22) Date de dépôt: 13.07.1989
(51) Int. Cl.: B60C 23/10

(54) **Regonfleur portatif**
Tragbare Luftpumpe
Portable reinflator

(30) Priorité: 05.08.1988 FR 8810771
(43) Date de publication de la demande: 07.02.1990
(73) Titulaire: MICHELIN & CIE (Compagnie Générale des Etablissements Michelin) Société dite:, F-63000 Clermont-Ferrand (FR)
(72) Inventeur: Grenie, Philippe, Greenville, S.C.F-29650 (FR); Mauduit, Jean-Michel, F-92360 Meudon-la-Foret (FR); Marguerie, Patrick, F-69003 Lyon (FR)
(74) Mandataire: Bauvir, Jacques

(56) Documents cités:
- US-A- 4 187 058

## Description

La présente invention concerne le dépannage d'un véhicule dont un pneumatique présente une perte de la pression de gonflage.

Si un pneumatique subit une avarie entraînant une perte de sa pression interne de gonflage, il n'est plus capable d'assurer le service pour lequel il est conçu. La solution actuellement généralisée consiste à prévoir un équipement appelé "roue de secours". On connaît également de nombreuses autres solutions visant à conférer à l'ensemble roue et pneumatique une certaine capacité à porter une charge en cas de crevaison, en prévoyant un appui adapté, le plus souvent à l'intérieur même de la cavité pneumatique (appuis rigides, rapportés à l'intérieur de la jante ou intégrés à celle-ci, appuis souples, boudins en caoutchouc mousse).

On connaît également, pour des véhicules devant circuler dans des conditions difficiles et variables, des installations intégrées au véhicule, installations qui permettent de régler la pression de gonflage des pneumatiques depuis le poste de conduite, et ceci tout en roulant. Le brevet FR-A-2 604 398 décrit un circuit de passage d'air, utilisable avec une telle installation intégrée au véhicule.

L'objectif de la présente invention est de proposer, pour faire face aux pertes de pression que peuvent subir les pneumatiques, un nouveau dispositif qui n'apporte aucune modification ni aux roues, ni aux pneumatiques existants, ni aux véhicules qu'ils équipent. Ce nouveau dispositif doit être plus facile à mettre en oeuvre que le montage d'une roue de secours. L'encombrement et le poids du dispositif doivent être inférieurs à ceux de ladite roue de secours. L'intervention du dispositif ne doit provoquer aucune altération du pneumatique, qui doit être préservé après le roulage de dépannage.

Un regonfleur portatif ayant les caractéristiques du préambule de la revendication 1 est décrit, par exemple, dans le document US-A-4 187 058.

L'invention consiste en un regonfleur d'appoint, utilisable aussi bien à l'arrêt que lorsque le véhicule est en mouvement, permettant de remettre de l'air dans le pneumatique au fur et à mesure qu'il s'en s'échappe. De la sorte, par un simple branchement électrique sur le véhicule, et un simple branchement pneumatique sur la valve du pneumatique défectueux, sans démontage fastidieux, on assure le dépannage provisoire permettant de rejoindre le lieu de destination, ou une station service capable d'effectuer une réparation définitive.

Le regonfleur portatif pour pneumatique d'un véhicule, à connecter à une source électrique du véhicule d'une part et à la valve du pneumatique défectueux d'autre part. Il comporte un connecteur électrique, un compresseur, un joint tournant et un raccord de valve, une liaison électrique partant dudit connecteur pour rejoindre le compresseur, une première canalisation pneumatique allant du compresseur au joint tournant, une seconde canalisation pneumatique allant dudit joint tournant au raccord de valve et des moyens pour maintenir ledit joint tournant au voisinage de l'axe de rotation dudit pneumatique.

Les figures suivantes permettent de bien comprendre l'invention et d'en saisir tous les avantages.

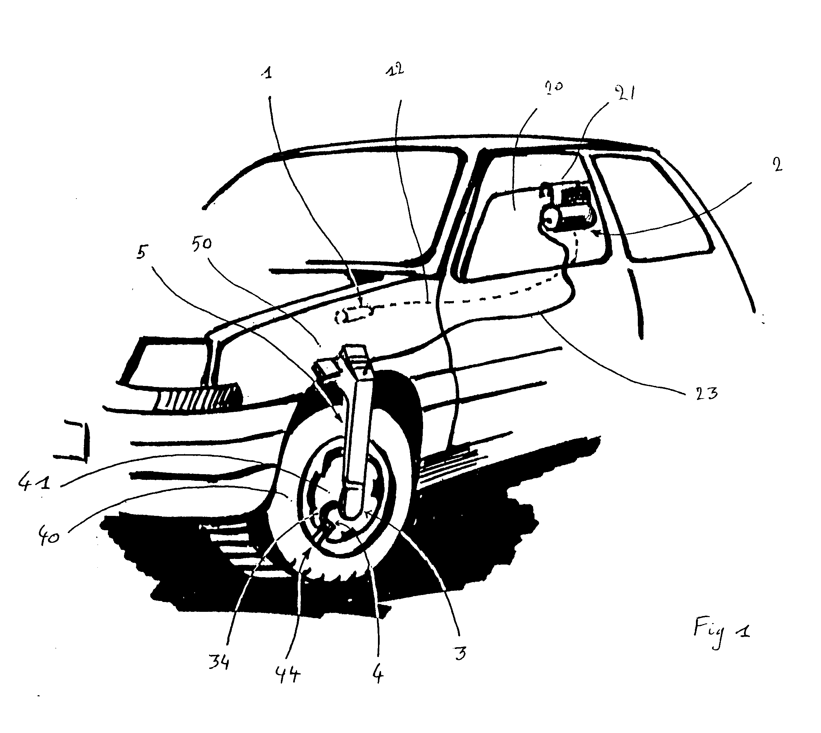

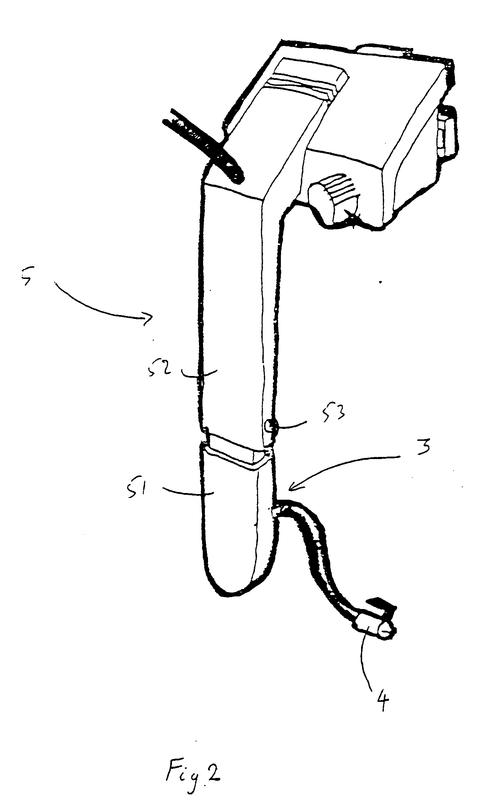

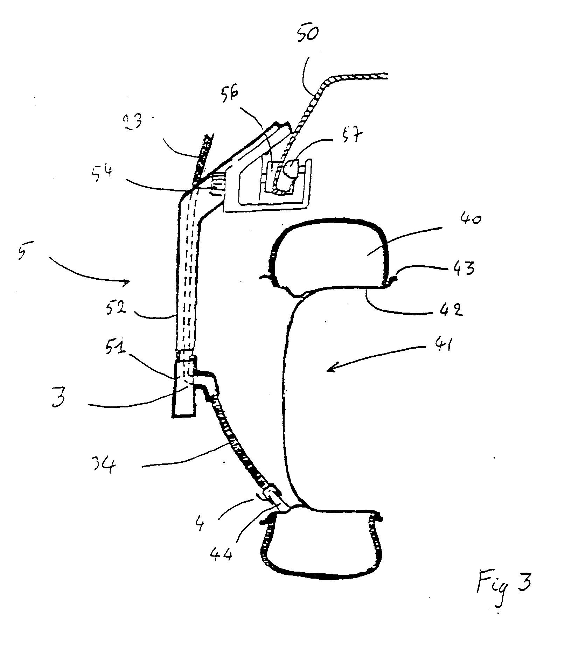

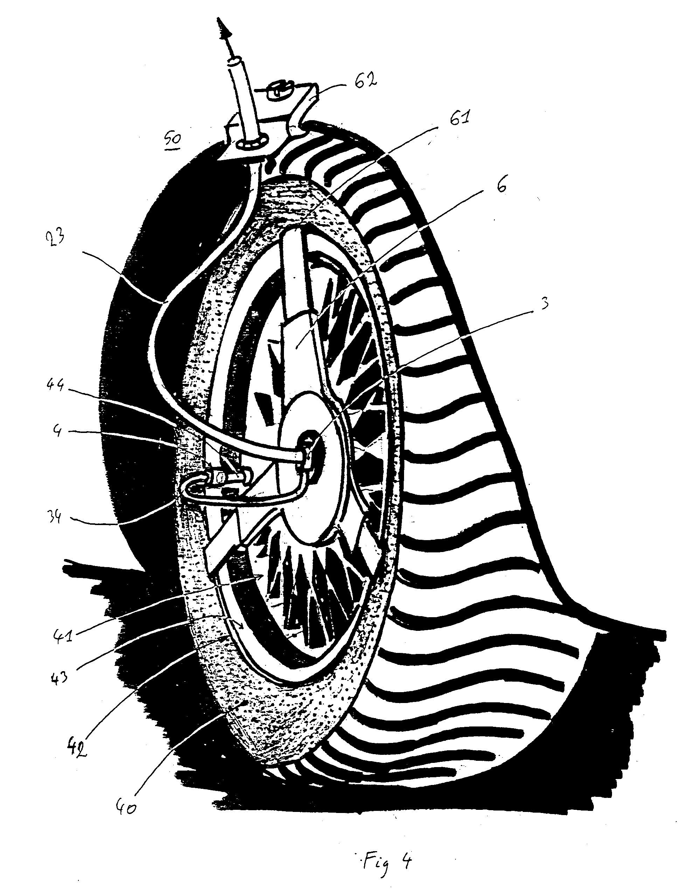

La figure 1 montre une voiture équipée d'un regonfleur portatif. Les figures 2 et 3 présentent un élément du regonfleur. La figure 4 illustre une variante d'exécution.

La figure 1 fait bien ressortir le principe de l'implantation provisoire et très simple du regonfleur portatif. Celui-ci comporte un connecteur électrique 1 sur le véhicule, par exemple une fiche du type se raccordant sur le support de l'allume-cigares. Pour les véhicules non équipés d'allume-cigares, on peut très facilement prévoir un branchement direct sur la batterie. On trouve ensuite une liaison électrique 12 partant dudit connecteur électrique pour rejoindre un compresseur 2, puis une canalisation pneumatique 23 allant vers un joint tournant 3, et ensuite à nouveau une canalisation pneumatique 34 terminée par un raccord 4 de valve adaptable sur la valve 44 du pneumatique 40 défectueux.

De préférence, on prévoit des moyens de limitation de la pression à une valeur "seuil" adaptée au domaine d'application. Ainsi, par exemple, pour les véhicules de tourisme, la pression de gonflage nominale est de l'ordre de 2 bars. Si l'on souhaite que le regonfleur portatif proposé soit polyvalent, on peut adopter un seuil de pression de l'ordre de 1.7 bar, ce qui permet de dépanner aussi bien les pneumatiques de véhicule de tourisme fonctionnant à pression faible, sans atteindre pour ceux-ci une pression vraiment excessive, que de dépanner des pneumatiques demandant des pressions plus élevées, en atteignant pour ceux-là une pression suffisante pour déplacer un véhicule à des vitesses de l'ordre de 100 à 120 km/h, considérées comme suffisantes pour un dépannage temporaire. L'auto-limitation de pression peut être assurée par un dispositif de régulation approprié, ou être le fait même du compresseur qui, par construction, peut être conçu de façon à ne pas pouvoir dépasser la pression de seuil voulue (clapet de décharge, limitation intrinsèque,...).

De préférence, on prévoit des moyens pour maintenir le joint tournant 3 au voisinage de l'axe de rotation du pneumatique 40. On peut lier mécaniquement le joint tournant 3 soit à la roue 41, soit au véhicule.

A la figure 1, on voit un bras 5 prenant appui sur une aile 50 du véhicule de façon à immobiliser par rapport à l'aile 50 le joint tournant 3 monté à l'extrémité du bras 5. Dans ce cas, la canalisation pneumatique 34 rejoignant le raccord 4 de valve 44 doit être suffisamment longue, souple et solide pour s'accommoder des débattements de suspension. Pour les roues directrices, l'implantation du bras 5 sur l'aile 50 doit être telle qu'il n'y ait non seulement aucun contact avec le pneumatique lors du braquage, mais encore telle qu'il subsiste toujours entre la roue 41 et le bras 5 le jeu nécessaire au libre passage de la canalisation 34. De préférence, on accroche le bras 5 à l'aplomb de l'axe de rotation de la roue 41.

Le bras 5 comporte un moyen de réglage de sa longueur afin que l'on puisse, après fixation sur l'aile 50, disposer le joint tournant 3 en regard de l'axe de rotation de la roue 41 (voir en particulier la figure 2). Le bras 5 est constitué par deux parties 51 et 52, coulissant l'une 51 dans l'autre 52, avec une vis de blocage 53 permettant d'immobiliser la partie 51 portant le joint tournant 3 par rapport à la partie 52 du bras 5 fixée sur l'aile 50.

La figure 3 montre de façon schématique comment on peut réaliser une fixation amovible sur le bord inférieur de l'aile 50. Une molette 54 commande le déplacement d'un presseur 56 par rapport à une butée 57 prenant appui à l'intérieur de l'aile sur le pliage de la tôle. On constitue ainsi une pince qui peut immobiliser fermement le bras 5 par rapport à l'aile 50, sans causer de dégradation à la carrosserie.

Le compresseur 2 peut être disposé à l'intérieur du véhicule, ou à l'extérieur. Si l'implantation est extérieure, la canalisation pneumatique 23 allant du compresseur 2 au joint tournant 3 n'a pas à franchir la carrosserie. Le passage d'un simple câble électrique (liaison 12), par exemple par une portière du véhicule, ne pose aucun problème. La vitre 20 d'une portière constitue un support intéressant pour le compresseur 2. Elle permet une implantation facile et solide, par exemple par un ou des crochets 21 s'adaptant sur le bord supérieur de la vitre. Il est possible que ce ou ces crochets 21 soient suffisamment minces pour permettre de remonter la vitre 20. On a alors un accrochage très sûr du compresseur 2. Sa disposition particulièrement visible permet aussi de rappeler en permanence au conducteur qu'il utilise un dispositif de secours. On peut également prévoir d'ajouter un manomètre visible au travers de la vitre 20. En variante, on peut incorporer au connecteur électrique 1 des moyens appropriés pour informer le conducteur sur le niveau de pression du pneumatique.

La figure 4 illustre une variante d'exécution des moyens de maintien du joint tournant 3. On le lie cette fois à la roue 41 par au moins trois pattes 6, chacune pourvue à son extrémité d'un crochet 61 destiné à coopérer avec le rebord 42 de jante 43 sur laquelle le pneumatique 40 est monté.

L'appui se fait radialement par l'extérieur sur ledit rebord 42. De préférence, on dispose trois pattes 6, dont l'une est de longueur variable pour assurer le serrage de l'ensemble sur le rebord 42 de la jante 43. La latitude de réglage en longueur peut être telle que la liaison par ce dispositif à trois pattes 6 disposées en étoile peut s'adapter à plusieurs diamètres de jante 43. Le positionnement des crochets 61 sur le rebord 42 de la jante 43, entre la roue 41 et le pneumatique 40, permet de réaliser une fixation universelle, car cette zone fait l'objet de normalisations assez précises, alors que tout autre endroit de la roue 41 est réalisé très différemment d'une voiture à l'autre. De plus, l'installation n'endommage ni la roue 41, ni le pneumatique 40, et s'effectue très aisément car lorsque le pneumatique 40 est dégonflé, la pression des talons du pneumatique 40 sur le rebord 42 de la jante est modérée. L'introduction des crochets 61 se fait donc très aisément : on positionne par exemple d'abord les crochets de celles des pattes 6 dont la longueur est fixe de part et d'autre de la zone de contact avec le sol, puis on insère le troisième crochet 61 et on réalise le serrage. N'importe quel dispositif de tension, à ressort, à sangle, à genouillère ou autre, peut convenir. Une simple pince 62 fixe sur l'aile 50 la canalisation 23 allant du compresseur 2 au joint tournant 3, de façon à éviter tout contact avec le pneumatique 40 en mouvement.

Si l'on accepte de modifier la roue ou son enjoliveur, on peut percer la roue ou son enjoliveur en son centre et prévoir une fixation par vissage ou fixation par clip.

La réalisation du joint tournant 3 ne pose aucun problème particulier : on prévoit un emboîtement du type mâle/femelle, avec un blocage empêchant toute désolidarisation. Un simple joint torique assure l'étanchéité, avec une fiabilité suffisante car d'une part les faibles dimensions assurent des vitesses relatives de mouvement limitées, et d'autre part il s'agit d'un dispositif à usage occasionnel.

Il est bien certain que l'on peut prévoir de multiples variantes d'exécution, notamment pour les fixations ou pour la localisation du compresseur 2, ou du joint tournant 3, qui pourrait être lié à la valve. Par exemple, le compresseur 2 pourraît être solidaire des moyens de maintien du joint tournant 3, même dans leur version liant le joint tournant 3 à la roue 41. On peut prévoir des attaches intermédiaires supplémentaires pour les canalisations pneumatiques. On peut au besoin prévoir un jeu d'accessoires pour adapter l'implantation du gonfleur portable à différents véhicules.

Dans le cas où le compresseur est fixé à la roue, on peut envisager de le faire tourner avec la roue. Dans ce cas, il n'y a pas de joint tournant, mais un contact électrique tournant entre le compresseur et le connecteur électrique sur le véhicule.

## Revendications

1. Regonfleur portatif pour pneumatique (40) d'un véhicule, à connecter à une source électrique du véhicule d'une part et à la valve du pneumatique défectueux d'autre part, comportant un connecteur électrique (1), un compresseur (2), un raccord (4) de valve, une liaison électrique (12) partant dudit connecteur (1) pour rejoindre ledit compresseur (2), caractérisé en ce qu'il comporte un joint tournant (3), une première canalisation pneumatique (23) allant du compresseur (2) audit joint tournant (3), une seconde canalisation pneumatique (34) allant dudit joint tournant (3) audit raccord (4) de valve et des moyens (65) pour maintenir ledit joint tournant (3) au voisinage de l'axe de rotation dudit pneumatique (40).

2. Regonfleur selon la revendication 1, caractérisé en ce qu'il comporte des moyens de limitation de la pression à une valeur de seuil.

3. Regonfleur selon l'une des revendications 1 et 2, caractérisé en ce qu'il comporte des moyens pour fixer le compresseur sur la surface extérieure dudit véhicule.

4. Regonfleur selon la revendication 3, caractérisé en ce que lesdits moyens pour fixer le compresseur sont des moyens de fixation à une vitre (20) de portière.

5. Regonfleur selon la revendication 4, caractérisé en ce que lesdits moyens de fixation sont constitués par au moins un crochet (21) s'adaptant sur le bord supérieur de la vitre (20).

6. Regonfleur selon la revendication 1, caractérisé en ce que lesdits moyens pour maintenir ledit joint tournant (3) au voisinage de l'axe de rotation du pneumatique (40) comportent au moins trois pattes (6), chaque patte étant pourvue à son extrémité d'un crochet (61) destiné à coopérer avec le rebord (42) de la jante (43) sur laquelle le pneumatique (40) est monté, par un appui radialement par l'extérieur sur ledit rebord (42).

7. Regonfleur selon la revendication 6, caractérisé en ce qu'il comporte trois pattes (6) dont l'une est de longueur variable et comporte un dispositif pour effectuer le serrage sur le rebord (42) de la jante (43).

8. Regonfleur selon la revendication 1, caractérisé en ce que lesdits moyens pour maintenir ledit joint (3) tournant au voisinage de l'axe de rotation du pneumatique sont constitués essentiellement par un bras (5) prenant appui de façon amovible sur l'aile (50) du véhicule, ledit bras (5) portant à son extrémité ledit joint tournant (3).

9. Regonfleur selon la revendication 8, caractérisé en ce que le bras (5) comporte un moyen de réglage de sa longueur.

10. Regonfleur portatif pour pneumatique d'un véhicule à connecter à une source électrique du véhicule d'une part, et à la valve du pneumatique défectueux d'autre part, caractérisé en ce qu'il comporte un connecteur électrique, un compresseur et un raccord de valve, une liaison électrique allant dudit connecteur électrique vers un compresseur, ladite liaison comprenant un contact électrique tournant, des moyens pour fixer de façon amovible ledit compresseur à la roue, une canalisation pneumatique allant dudit compresseur vers ledit raccord de valve.

11. Regonfleur selon la revendication 10, caractérisé en ce qu'il comporte des moyens de limitation de la pression à une valeur de seuil.

## Claims

1. A portable reinflator for a tire (40) of a vehicle, to be connected to an electric source of the vehicle and to a valve of a defective tire comprising an electric connector (1), a compressor (2), and a valve coupler (4), an electric connection (12) connecting said electric connector (1) to said compressor (2), characterized by the fact that it comprises a rotary seal (3), a first pneumatic line (23) connecting said compressor (2) to said rotary seal (3), a second pneumatic line (34) connecting said rotary seal (3) to said valve coupler (4), and means maintaining said rotary seal (3) close to the axis of rotation of the tire (40).

2. Reinflator according to claim 1, characterized by the fact that it comprises means for limiting pressure to a threshold value.

3. Reinflator according to one of claims 1 or 2, characterized by the fact that it comprises means for attaching the compressor to an outside surface of said vehicle.

4. Reinflator according to claim 3, characterized by the fact that said means for attaching the compressor to said outside surface of said vehicle are means for attachment to a door window (20).

5. Reinflator according to claim 4, characterized by the fact that said attachment means comprises at least one hook (21), which can be mounted to an upper edge of said window (20).

6. Reinflator according to claim 1, characterized by the fact that said means for maintaining said rotary seal (3) close to the axis of rotation of said tire (40) comprises at least three clamps (6), each clamp being provided on its end with a hook (61) which can be attached to a flange (42) of a rim (43) on which said tire is mounted, wherein support is achieved radially on the outside of said flange (42).

7. Reinflator according to claim 6, characterized by the fact that one of said at least three clamps (6) is of variable length and comprises a device to perform tightening on the flange (42) of said rim (43).

8. Reinflator according to claim 8, characterized by the fact that said means for maintaining said rotary seal (3) close to the axis of rotation of the tire comprises an arm (5) supported at one end in a removable manner on a fender (50) of the vehicle, said arm (5) carrying on its other end said rotary seal (3).

9. Reinflator according to claim 8, characterized by the fact that said arm (5) comprises means for adjusting its length.

10. A portable reinflator for a tire of a vehicle, to be connected to an electric source of the vehicle and to a valve of a defective tire, characterized by the fact that it comprises an electric connector, a compressor, and a valve coupler ; an electric connection connecting said electric connector to said compressor, said electric connection comprising a rotary electric contact ; means for attaching said compressor to a wheel in a removable manner ; and a pneumatic line connecting said compressor to said valve coupler.

11. Reinflator according to claim 10, characterized by the fact that it comprises means for limiting pressure to a threshold value.

## Patentansprüche

1. Tragbare Reifenfüllvorrichtung für Luftreifen (40) eines Fahrzeugs, die zur Verbindung mit einer Stromquelle des Fahrzeugs sowie mit dem Ventil des defekten Luftreifens vorgesehen ist und die einen elektrischen Stecker (1), einen Kompressor (2), ein Ventilanschlußstück (4) sowie eine elektrische Verbindungsleitung (12) aufweist, die den Stecker (1) mit dem Kompressor (2) verbindet,
dadurch gekennzeichnet, daß sie aufweist:
Einen Drehflansch (3), eine erste Druckluftleitung (23), die vom Kompressor (2) zum Drehflansch (3) führt, eine zweite Druckluftleitung (34), die den Drehflansch (3) mit dem Ventilanschlußstück (4) verbindet, sowie eine Einrichtung (6, 5), mit welcher der Drehflansch (3) in der Nähe der Drehachse des betreffenden Luftreifens (40) gehalten werden kann.

2. Reifenfüllvorrichtung nach Anspruch 1, dadurch gekennzeichnet, daß sie eine Einrichtung zur Begrenzung des Drucks auf einen Grenzwert aufweist.

3. Reifenfüllvorrichtung nach einem der Ansprüche 1 und 2, dadurch gekennzeichnet, daß sie eine Einrichtung zur Befestigung des Kompressors an der Außenseite des Fahrzeugs aufweist.

4. Reifenfüllvorrichtung nach Anspruch 3, dadurch gekennzeichnet, daß die Einrichtung zur Befestigung des Kompressors eine Einrichtung zur Befestigung an einer Scheibe (20) einer Türe ist.

5. Reifenfüllvorrichtung nach Anspruch 4, dadurch gekennzeichnet, daß die Einrichtung zur Befestigung des Kompressors aus mindestens einem Haken (21) besteht, der an den oberen Rand der Scheibe (20) der Türe paßt.

6. Reifenfüllvorrichtung nach Anspruch 1, dadurch gekennzeichnet, daß die Einrichtung zur Befestigung des Drehflansches (3) in der Nähe der Drehachse des Luftreifens (40) mindestens drei Befestigungsarme (6) aufweist, die jeweils an ihrem Ende einen Haken (61) besitzen, der so zum Zusammenwirken mit dem Felgenrand (42) der Felge (43), auf welcher der Luftreifen (40) montiert ist, vorgesehen ist, daß er radial außerhalb des Felgenrandes (42) zur Anlage kommt.

7. Reifenfüllvorrichtung nach Anspruch 6, dadurch gekennzeichnet, daß sie drei Befestigungsarme (6) aufweist, von denen einer längenverstellbar ist und eine Einrichtung zur Verriegelung über dem Felgenrand (42) der Felge (43) aufweist.

8. Reifenfüllvorrichtung nach Anspruch 1, dadurch gekennzeichnet, daß die Einrichtung zur Halterung des Drehflansches (3) in der Nähe der Drehachse des Luftreifens im wesentlichen aus einem Befestigungsarm (5) besteht, der lösbar am Kotflügel (50) des Fahrzeugs befestigbar ist und an seinem Ende den Drehflansch (3) trägt.

9. Reifenfüllvorrichtung nach Anspruch 8, dadurch gekennzeichnet, daß der Befestigungsarm (5) eine Einrichtung zur Längenverstellung aufweist.

10. Tragbare Reifenfüllvorrichtung für Luftreifen eines Fahrzeugs, die zur Verbindung mit einer Stromquelle des Fahrzeugs sowie mit dem Ventil des defekten Luftreifens vorgesehen ist, dadurch gekennzeichnet, daß sie einen elektrischen Stecker, einen Kompressor und ein Ventilanschlußstück, eine elektrische Verbindungsleitung, die den Stecker mit dem Kompressor verbindet und einen elektrischen Drehkontakt aufweist, eine Einrichtung zur lösbaren Befestigung des Kompressors am Rad sowie eine Druckluftleitung aufweist, die den Kompressor mit dem Ventilanschlußstück verbindet.

11. Reifenfüllvorrichtung nach Anspruch 10, dadurch gekennzeichnet, daß sie eine Einrichtung zur Begrenzung des Drucks auf einen Grenzwert aufweist.
